# EUROPEAN PATENT APPLICATION

(11) **EP 4 684 909 A1**
(43) Date of publication of application: **28.01.2026**
(21) Application number: 25192213.4
(22) Date of filing: 28.07.2025
(51) Int. Cl.: B23P 19/06, B25J 15/00

(54) **UNSCREWING DEVICE APPLICABLE TO A ROBOT**

(30) Priority: 26.07.2024 IT 202400017416
(71) Applicant: HIRO Robotics S.r.l., 16121 Genova (GE) (IT)
(72) Inventor: Lottero, Jacopo, 16121 Genova (GE) (IT); Riva, Christian, 16121 Genova (GE) (IT)
(74) Representative: Bottino, Giovanni

(57) **Abstract**

Unscrewing device applicable to a robot, which device comprises an unscrewing module (1) and a screw recovery module (2), the unscrewing module (1) comprising an unscrewing device (10) provided with an unscrewing tip (11).

The screw recovery module (2) comprises:
a first piston (20) movable from a retracted position to a position of contact with a screw in a condition coupled with the unscrewing tip (11), the first piston (20) being provided with a striking head (21) with said screw, and
an end nozzle (22) of a suction duct (23), which end nozzle (22) is movable from a retracted position to a position in proximity to the unscrewing tip.

## Description

The present invention relates to an unscrewing device applicable to a robot, which device comprises an unscrewing module and a screw recovery module, the unscrewing module comprising an unscrewing tool provided with an unscrewing tip.

Electronic devices for displaying images, text, and video, such as televisions and, in particular, flat-screen displays, contain a number of components that can be recycled, as well as elements that require special disposal. The internal electronic boards are typically the recyclable components, while the backlight lamps, which may contain mercury vapors, require specific treatment due to the environmental and health risks associated with their breaking.

At the end of their life, it is essential to properly disassemble these devices to ensure both the recovery of recyclable components and the safe treatment of hazardous components. At the state of the art, there are various solutions to address this need, including fully automated processes, processes conducted by human operators, and hybrid processes that combine the action of robotic systems and human operators.

Automated processes may include the use of conveyor belts that transport displays to shredding stations where they are mechanically crushed. Although this solution is efficient in terms of speed and dismantling volume, it does not allow for the recovery of specific electronic components. Manual processes, although slower, allow for the selective recovery of both recyclable components and mercury-containing lamps. However, these are not compatible with the needs of large industrial plants due to the lengthy timeframes involved.

Hybrid solutions seek to combine the advantages of automated and manual processes, using robotic systems for preliminary operations and human operators for component recovery.

Robotic systems are currently known for detecting and removing screws, a task that is still largely performed by human operators. Recently, the industry trend has been for robotic systems to perform this screw detection and removal task automatically, rather than performing destructive or partially destructive operations.

In order for a robotic system to remove screws from displays, it must be equipped with a screw identification system and an automated unscrewing system attached to the robot head.

However, automated screw management using robots faces a number of challenges, such as how to remove and recover the extracted screws and how to ensure measured pressure for effective unscrewing.

These issues have been addressed by a number of state-of-the-art devices and systems.

However, these systems do not optimally meet all the requirements of the unscrewing procedure. The unscrewing procedure requires that the unscrewing tip engage with the screw head with adequate force; that the screw remain engaged with the tip both during unscrewing and, above all, during removal; and that the screw separate easily from the unscrewing tip at the exact moment it is picked up by the screw recovery module.

Document CN205021144U describes an unscrewing station. The unscrewer has a movable tip in a channel. At the open end of this channel there is an area where the tip can carry the screw once unscrewed and where the suction terminal of an aspirator is located so that the screw is carried to a screw recovery container.

Document US2020238453A1 describes an unscrewing station with a screw collection system. The tip of the unscrewer passes through a collection mechanism in a hole to engage with the screw and unscrew it. The tip is magnetic and the screw is picked up. The collection mechanism has a transfer chamber in which two opposing blocks are actuated towards each other to act as a clamp on the screw and separate it from the tip. The transfer chamber also houses the suction terminal of an aspirator connected to a collection box.

Document JPS59142032 describes an unscrewing station with screw collection. The tip of the unscrewer is retractable into a chamber where the duct of a suction device opens. Suction is used not only to collect the screw from the chamber but also to pick up the screw after it has been unscrewed, thanks to a duct in which the tip of the unscrewer operates.

Document CN219189213U describes a screw unscrewing station comprising a screw collection system. The tip of the unscrewing device is retractable to a position corresponding to a suction duct.

These known systems describe screw unscrewing stations that are not suitable for mounting on robots and are therefore designed for static operations that do not take into account the complexity of the robot's movements. In particular, the solution common to these known systems of providing a retractable unscrewing tip in a suction chamber is not very suitable for robot head devices. This is because this solution requires complex and bulky systems for moving the entire unscrewing device and because it is subject to jamming of the screws inside the suction chamber due to the movements that the robot necessarily performs.

Document CN110076553A describes a battery disassembly system comprising a robotic arm with an electric unscrewing device and a suction system for collecting the removed screws. The suction device comprises a hollow hinged rod driven by a hydraulic cylinder, a negative pressure machine, a collection box, and a suction head located near the tip of the unscrewing device.

However, the simple proximity of the suction head to the unscrewing tip does not guarantee that the screw will not remain stuck on the tip, thus preventing the screw from being retrieved and the unscrewing procedure from continuing smoothly on the other screws.

Document JP2003094261A describes a screw unscrewing machine equipped with an unscrewing unit comprising a screw suction tube mounted on a robot to automatically remove a screw by means of a tip integrated in the suction tube. A screw collection device is provided on the unscrewing unit, capable of receiving a plurality of screws removed from the tip. The screw is held on the tip by suction and, when the screw collection device is placed underneath it, the air flow is reversed to drop the screw into a collection element. Suction is therefore not used to recover the screws, nor is the screw collection device used to remove any screws that may be stuck on the tip.

Document JPH11104923A uses a screwdriver/unscrewer head with a rotatable magazine to deposit unscrewed screws or remove screws to be screwed, using compressed air.

The purpose of the present invention is a simple and reliable unscrewing device that can be coupled as a head device to a robot. The purpose of the present invention is also to provide an unscrewing device that allows the screw to be held on the unscrewing tip for the necessary time and to effectively separate the screw from the unscrewing tip when it is picked up by the screw recovery module, without the risk of jamming.

The present invention aims to overcome the drawbacks of currently known systems and to achieve the above-mentioned objectives with a screw-unscrewing device applicable to a robot as described at the beginning, in which, in addition, the screw recovery module comprises:
a first piston movable from a retracted position to a position in contact with a screw in engagement with the unscrewing tip, which first piston is provided with a striking head with said screw, and
an end nozzle of a suction duct, which end nozzle is movable from a retracted position to a position in proximity to the unscrewing tip.

The recovery module is therefore external and acts directly on the unscrewing tip thanks to the movement of the piston, without requiring the unscrewer to be moved to retract the unscrewing tip into an internal suction chamber. The impact head allows contact to be made with the screw at the same time as suction, so as to effectively separate the screw from the unscrewing tip, eliminating the risk of jamming that could interrupt the unscrewing process. The end nozzle of the suction duct, which is brought close to the tip, allows the screw to be removed and recovered at the exact moment when it is separated from the unscrewing tip by the impact head. Providing both the impact head and the end nozzle of the suction duct with retractable features means that the tip of the unscrewing tool has no fixed protrusions around it and can therefore easily reach screws that are difficult to access, such as those located in recesses.

In an executive example, the first piston is positioned at an angle to the unscrewing tip and slides along an axis that forms an acute angle with the unscrewing axis, i.e., the axis on which the unscrewing tip lies.

This optimizes access to the screw, especially in situations where space is limited, resulting in the most compact configuration possible so as not to restrict the robot's movements.

The acute angle also improves contact effectiveness, as it aims to engage with the screw head while it is coupled on the unscrewing tip, easily separating the screw.

In a first embodiment, the terminal nozzle of the suction duct is arranged on the impact head of the first piston.

In this embodiment, the device is compact and simple to manufacture. The presence of a single actuator for both the impact and suction functions reduces the number of moving parts, simplifies motion control, and lowers overall production and maintenance costs. Furthermore, the synchronized movement of the head and the nozzle allows for faster cycle times and limits the risk of misalignment or internal collisions, making the solution particularly suitable for high-speed production contexts or those with stringent dimensional constraints.

According to an executive example, the said terminal nozzle has an inverted U-shaped profile.

This configuration means that the nozzle has two side walls, which guide and center the screw as the piston approaches the unscrewing tip, and a top wall that acts as a real stop on the screw, for example on the edge of the screw head, removing it from the unscrewing tip and making it available for suction. This allows for more effective removal of the screws, ensuring that they are promptly conveyed into the recovery container without any problems.

In a second embodiment, the end nozzle of the suction duct is coupled to a second piston that can be moved from a retracted position to a position close to a screw coupled with the unscrewing tip.

This allows for greater functional flexibility, thanks to the ability to control the movement of the nozzle and the impact head separately, which optimizes the sequence and timing of the screw release and suction operations. This configuration also allows for better adaptation to variable geometries or non-uniform operating conditions.

According to one embodiment, the second piston is positioned at an angle to the unscrewing tip and can slide along an axis that forms an acute angle with the unscrewing axis. Preferably, the second piston and the first piston lie in the same plane and are arranged symmetrically with respect to the tip.

According to a further embodiment, the suction duct is partly made up of a bellows that can be moved from a contracted to an extended position.

This feature allows the suction duct to adapt dynamically to changes in the position of the piston, maintaining a constant suction force. Another advantage of the bellows is its ability to absorb vibrations and movements of the robot and piston during unscrewing and recovery operations, providing good wear resistance.

According to an executive example, pneumatic means for actuating the said piston are provided.

The use of pneumatic means ensures precise and responsive control of the piston movement, allowing quick and effective screw contact and separation. This improves the overall speed of the unscrewing and recovery process, making the device suitable for high-intensity applications. The pneumatic means also allow the force applied by the piston to be modulated according to the specific requirements of the operation, for example to work with screws of different sizes and materials, increasing the versatility of the device.

Alternatively, hydraulic actuation or electric linear actuators can be provided.

In a further embodiment, the unscrewing module is equipped with a guide bushing for the unscrewing tip.

The guide bushing ensures that the unscrewing tip always remains perfectly aligned, preventing excessive clearances and mechanical tolerances and minimizing the risk of misalignments that could damage the screw or the unscrewing module itself. This precise alignment is particularly useful when working with screws located in hard-to-reach positions or at awkward angles, allowing the device to operate efficiently in all conditions, reducing wear and the risk of breakage of the unscrewing tip.

According to a further embodiment, the guide bushing is provided with a solenoid for magnetizing the unscrewing tip.

Magnetization of the unscrewing tip allows the screw to be held securely during the unscrewing process, reducing the risk of accidental drops and ensuring that the screw remains in position until it is picked up by the recovery module. This feature allows magnetic screws, which are the majority, i.e., generally made of ferromagnetic materials that are attracted by magnetic fields, to be held in place. This magnetic effect also facilitates the initial alignment of the screw with the unscrewing tip, making the operation faster and more accurate. The presence of the solenoid also allows the magnetization to be activated and deactivated in a controlled manner, ensuring that the screw separates easily from the tip at the exact moment of retrieval, without requiring excessive force that could damage the components.

According to one embodiment, the unscrewing module comprises a guide in which the unscrewing device is positioned so that it can be moved along the unscrewing axis, with means provided to damp the movement.

In a preferred embodiment, the damping means are spring-loaded, in particular comprising one or more springs. However, other damping means can be used, such as elastomeric elements or viscoelastic dampers.

The guide, preferably spring-loaded, allows the entire body of the unscrewer to move vertically to dampen contact between the screw and the unscrewing tip. This configuration allows the module to adapt dynamically to changes in the position and resistance of the screw, ensuring constant contact and adequate pressure without overloading the unscrewing tip or the screw itself.

This configuration is particularly suitable for use in combination with robots, as this is an operating environment where vibrations or unexpected movements are present. The spring dampers can quickly compensate for these variations, maintaining the effectiveness of the unscrewing process.

The spring's elastic coefficient is appropriately sized to achieve a good trade-off between the damping coefficient and the rigidity of the unscrewing device.

According to an embodiment, a camera is provided.

The camera allows a direct view of the work area, enabling real-time visual monitoring of the unscrewing operations. This significantly improves the accuracy of the positioning of the unscrewing tip on the screw head, reducing the risk of misalignment and potential damage to both the device and the screw.

In addition, the camera provides visual data that can be used for documentation and quality control, ensuring that each unscrewing operation is performed correctly and in accordance with the required standards. This feature is particularly useful in industrial applications where traceability and process verification are essential.

According to a further embodiment, the camera is connected to an artificial vision module configured for screw identification.

The artificial vision module may be provided on the device itself, or cable or wireless connection means may be provided to a remote processing unit comprising the artificial vision module.

The ability to perform visual recognition directly on the unscrewing device allows the robot to carry out an inspection phase with random or programmed movements to identify each screw and then remove it.

According to one embodiment, an illuminator is provided.

This improves visibility and accuracy during operations, reducing shadows and improving the ability of the machine vision module to detect screws in order to accurately align the unscrewing tip with the screw head.

According to a further embodiment, the illuminator is of the stroboscopic type.

A stroboscopic illuminator emits flashes of light at a predetermined frequency, which can significantly improve the quality of the images captured by the camera, reducing motion blur and improving the sharpness of visual details. This feature is particularly advantageous when operating at high speeds or when high precision is required in screw recognition and robot alignment.

According to one embodiment, a force and/or torque sensor and a coupling flange to the robot are provided.

The force and/or torque sensor allows real-time monitoring of the forces applied during unscrewing operations, providing critical data that can be used to dynamically adjust the robot's movement. This feature allows precise control of the pressure and force exerted on the screw, preventing excessive stress that could cause damage to the screw or the unscrewing tip. In addition, the force and/or torque sensor can detect any anomalies such as jamming or misalignment, allowing the system to immediately stop the operation to prevent damage and ensure safe and controlled operation. The presence of the coupling flange facilitates the integration of the unscrewing device with the robot, ensuring a robust and stable connection.

These and other features and advantages of the present invention will become clearer from the following description of some examples illustrated in the accompanying drawings, in which:
Figures 1 to 4 illustrate different views of a first embodiment of the device with the first piston in the retracted position;
Figure 5 illustrates a view of a first embodiment of the device with the first piston in contact with the screw (not shown);
Figures 6 to 8 illustrate different views of a second embodiment of the device with the first and second pistons in the retracted position;
Figure 9 shows a view of a second embodiment of the device with the first piston in contact and the second piston in proximity to the screw (not shown).

The figures show an example of the unscrewing device that is the subject of this invention. The unscrewing device can be attached to a robot and, when coupled, becomes a robot head device. The robot is preferably a six-axis anthropomorphic robot, known for its versatility and ability to perform complex movements that allow for a wide range of industrial operations. However, the device could also be used with other types of robots, such as SCARA (Selective Compliance Assembly Robot Arm) robots, Cartesian robots, and delta robots.

The robot equipped with the unscrewing device is capable of searching for screws and unscrewing them in a fully automatic manner.

The device comprises an unscrewing module 1, a screw recovery module 2, and an inspection module.

The device comprises a substantially cubic containment case 6 in which the operating modules are contained or coupled.

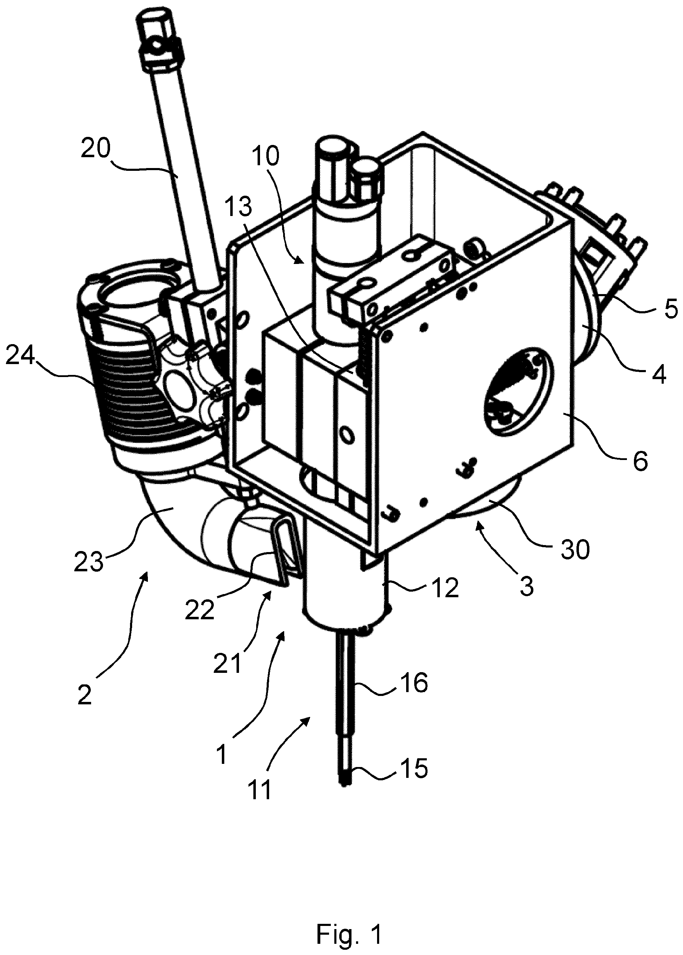

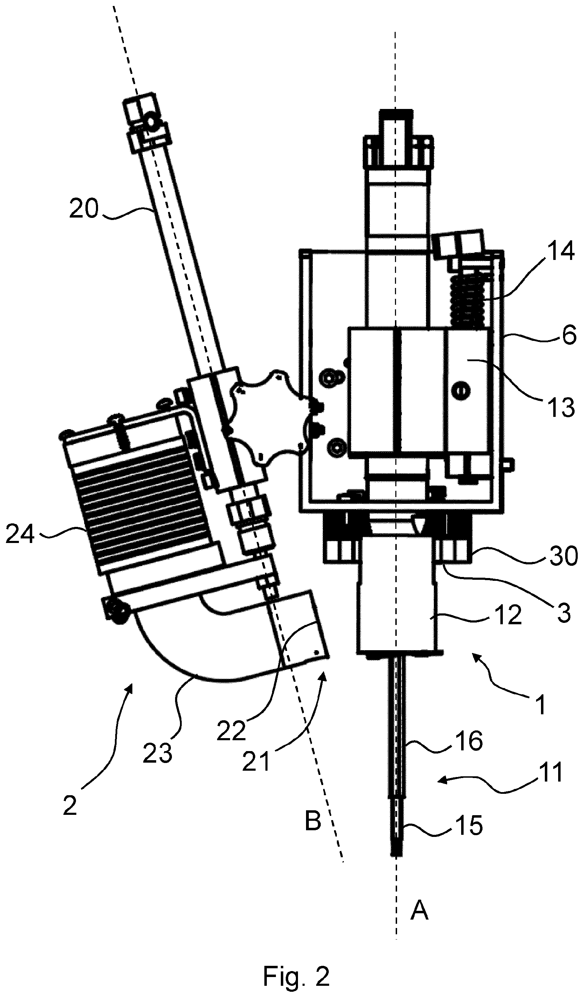

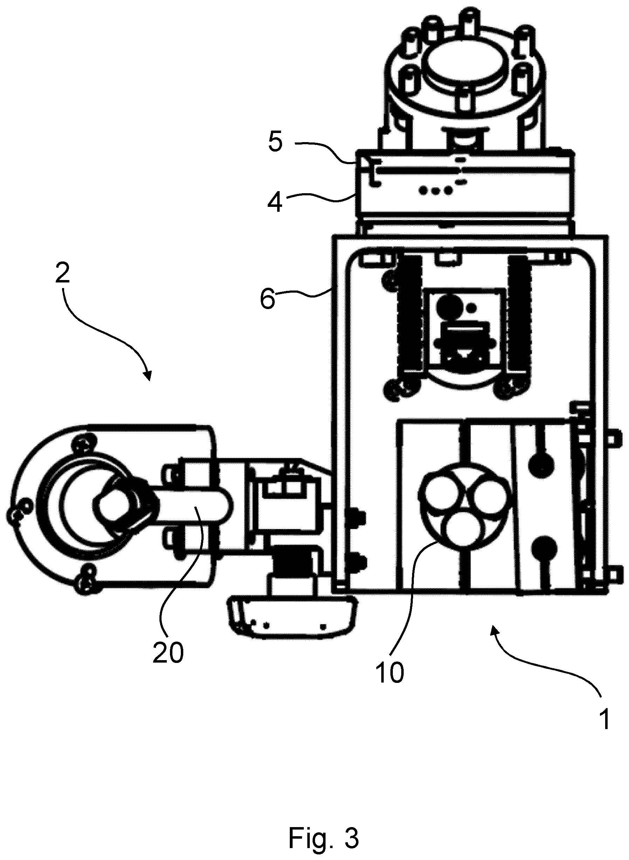

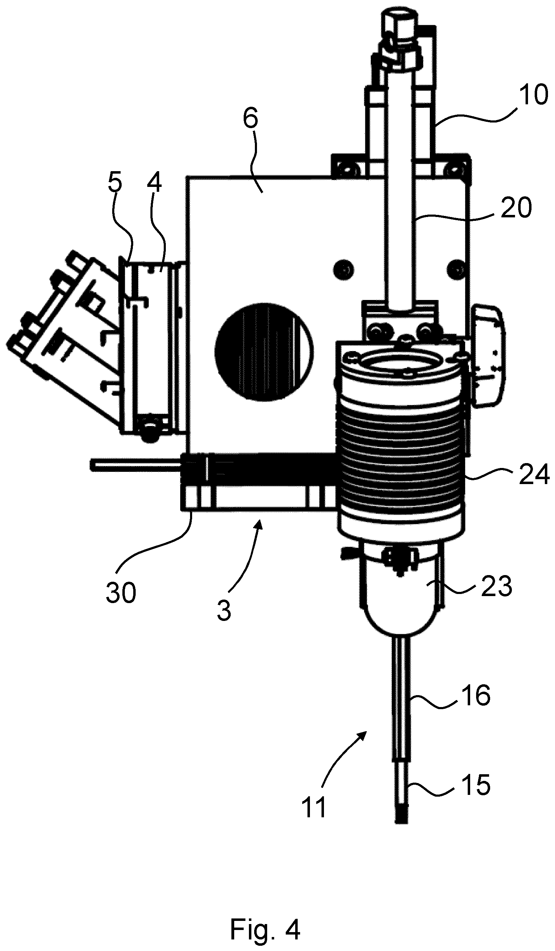

The unscrewing module 1 comprises an unscrewing device 10 equipped with an unscrewing tip 11. The unscrewing tip 11 consists of a rod with a shaped end that engages with the head of a screw. Preferably, as shown in Figures 1 to 5, the unscrewing tip 11 comprises a mandrel 16 and an unscrewing insert 15.

The unscrewing module 1 includes a guide 13 along which the unscrewing device 10 can move along the unscrewing axis A. This guide is equipped with shock-absorbing means, preferably one or more springs 14, which allow vertical movements to be dampened. These shock absorbers are suitably sized to balance the damping coefficient and the rigidity of the unscrewing device 10. In particular, the elastic coefficient of the springs 14 is calibrated to obtain an optimal compromise between damping and rigidity, ensuring gentle but effective contact between the screw and the insert 15.

The unscrewing device 10 is preferably a pneumatic unscrewing device but may be electric.

At the end of the unscrewing device 10, upstream of the spindle 16, a guide bushing 12 is screwed in place, which has a dual function. The guide bushing 12 holds the insert 15 in place, preventing excessive clearance, and houses a circular solenoid. The unscrewing tip 11 passes through the solenoid, with an internal radius preferably of 10 mm, and is magnetized to keep the screws attached to the insert 15 during the unscrewing process.

One or more ball bearings are installed at the end of the guide bushing 12, allowing the unscrewing tip 11 to rotate freely around its unscrewing axis A while remaining guided to prevent unwanted mechanical clearance. This design ensures smooth and precise movement, improving the overall efficiency of the unscrewing device.

To prevent screws from becoming stuck on the tip insert 15 after unscrewing, even in the presence of electromagnetic induction generated by the solenoid, a screw recovery module 2 is provided.

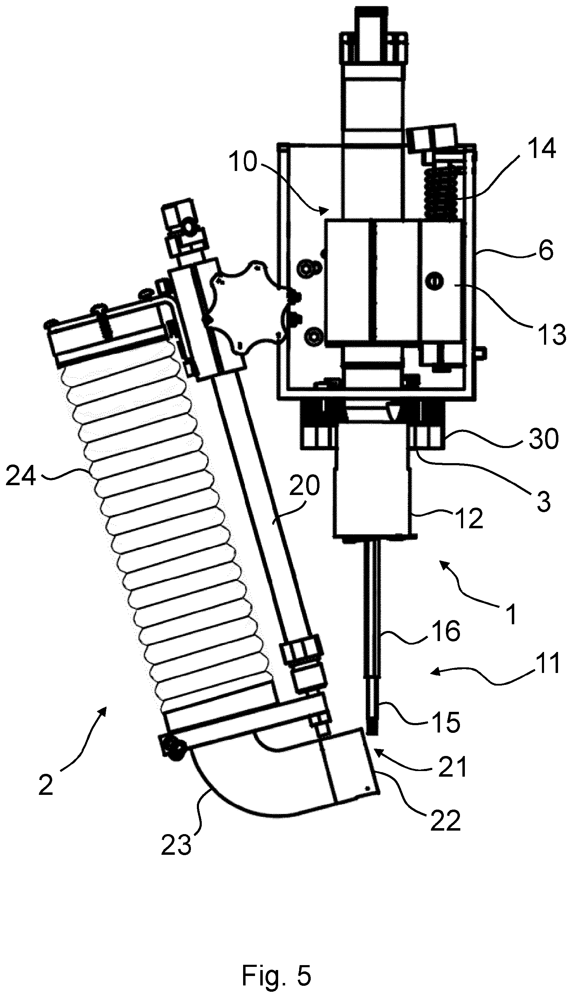

The screw recovery module 2 comprises a first piston 20 that can be moved from a retracted position, shown in figures 1 to 4, to a position in contact with a screw (not shown in the figure) that is in a coupled condition with the insert 15, shown in figure 5.

The first piston 20 is preferably pneumatically operated and controlled by a solenoid valve.

The first piston 20 is equipped with an impact head 21, designed to interact with the screw. The impact head 21 is provided with a terminal nozzle 22, connected to a suction duct 23.

The striking head 21 is configured to strike the screw, detach it from the tip insert 15 and simultaneously collect it in the suction duct 23. Suction can be carried out by means of industrial vacuum cleaners, both electric and pneumatic, or by means of a vacuum generation system.

The piston 20 is positioned at an angle to the unscrewing tip 11 and can slide along an axis B, forming an acute angle with the unscrewing axis A. The two axes intersect at the position of the screw coupled with the insert 15. This inclined positioning facilitates access and contact with the screw. The end nozzle 22 has an inverted U-shaped profile, which optimizes the collection and retention of the screw. The end nozzle 22 is in fact equipped with two side walls, which guide and center the screw during the approach of the piston 20 to the insert 15, and a top wall that acts as a real stop on the screw, for example on an edge of the screw head, removing it from the insert 15 and making it available for suction.

The suction duct 23 consists in part of a bellows 24, which can be moved from a contracted position, shown in Figures 1 to 4, to an extended position, shown in Figure 5, so as to accompany the stroke of the first piston 20.

The device includes an inspection module equipped with a camera 3, which is connected to an artificial vision module configured for screw identification.

A stroboscopic -type illuminator 30 is provided, which ensures intense, pulsating light, ideal for capturing sharp images even during rapid robot movements. In addition, the illuminator is of the ringlight type, which provides homogeneous and uniform illumination for camera 3.

Camera 3 is an RGB camera equipped with optics designed to capture precise details of the screws and their positions. Camera 3 is positioned so that its optical axis coincides with the axis of ring illuminator 30, ensuring perfect illumination of the inspection area.

Camera 3 is installed on an aluminum heat sink. This heat sink helps to effectively dissipate the heat generated by the camera chip, preventing overheating and maintaining stable camera performance over time.

The components of the inspection module can be varied according to the type of material to be processed, the inspection height of the robot, or the desired frame rate.

The device is equipped with a force and torque sensor 4 and a flange 5 for coupling to the robot. The coupling flange 5 is provided between the force and torque sensor 4 and the robot terminal flange. This coupling flange 5 is designed to interface with a six-axis anthropomorphic robot, but can be easily adapted to any industrial or collaborative robot and any force and torque sensor, preferably circular in shape. There is a 35° angle between the robot terminal flange and the force and torque sensor 4. This angle is designed to reduce potential singularity issues with the robot in use, optimizing system performance. However, the angle can be adapted to other types of robots.

The force and torque sensor 4 is coupled to the device's housing 6, ensuring accurate measurement of the forces and torques applied during unscrewing operations. The coupling flange 5 is connected to the force and torque sensor 4 and to the robot terminal, ensuring that the force sensor is securely integrated into the system.

The unscrewing cycle performed by the robot thanks to the device that is the subject of this invention comprises the following steps.

The robot performs a part inspection phase to search for screws to be unscrewed, preferably along a predetermined inspection path, using the inspection module to identify the presence of screws to be unscrewed.

Once a screw has been identified, the robot positions the device above it, ensuring that the unscrewing axis A is perfectly aligned with the axis of the screw.

The device is lowered by the robot until the tip of the insert 15 comes into contact with the head of the screw. At this stage, the signals generated by the force and torque sensor 4 are used to adjust the robot's movements and the force applied. When the insert 15 is correctly coupled with the screw head, the unscrewing device 10 is activated to start the unscrewing procedure.

At the end of unscrewing, the solenoid is energized to hold the screw on the insert 15. Preferably, the solenoid is activated in any case, even if this action is only essential for magnetic screws, as it ensures that the screw remains firmly coupled to the insert 15 during lifting.

The robot lifts the device again, preferably to the inspection height.

To remove the screw from insert 15, piston 20 is activated, bringing the striking head 21 into contact with the screw and pushing it away from insert 15. At the same time, the vacuum cleaner is activated to collect the detached screw, ensuring that it is safely transported to the collection container.

After the screw has been removed, the piston 20 returns to its rest position and the vacuum cleaner is deactivated, resetting the device for the next operation.

The inspection cycle resumes, with the robot continuing to search for and identify other screws to be unscrewed, repeating the process for each screw found.

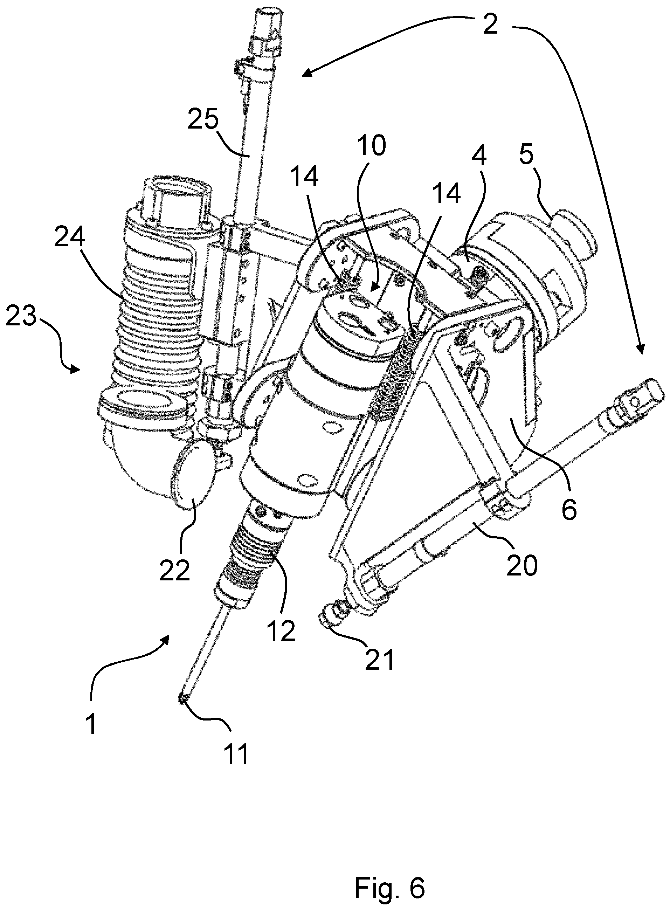

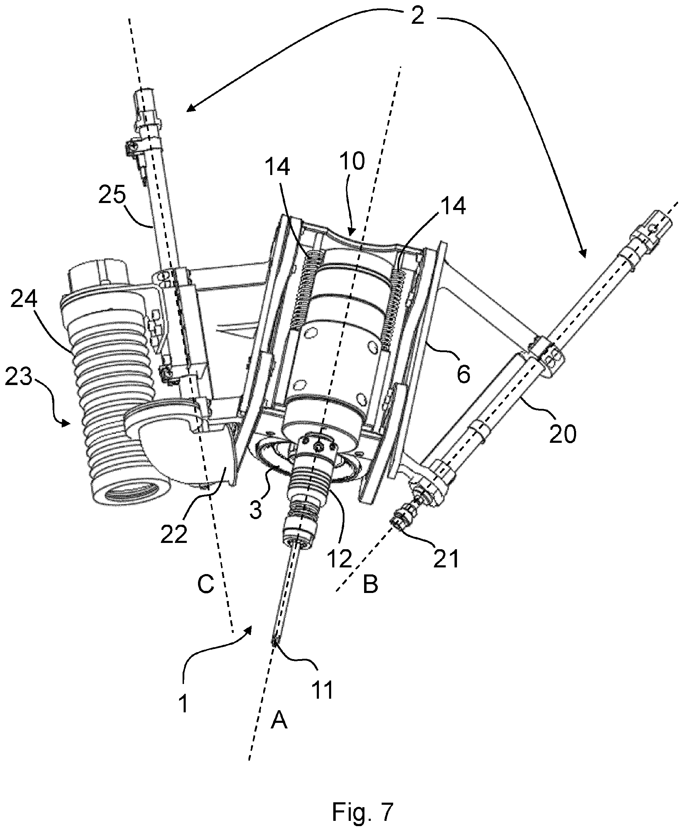

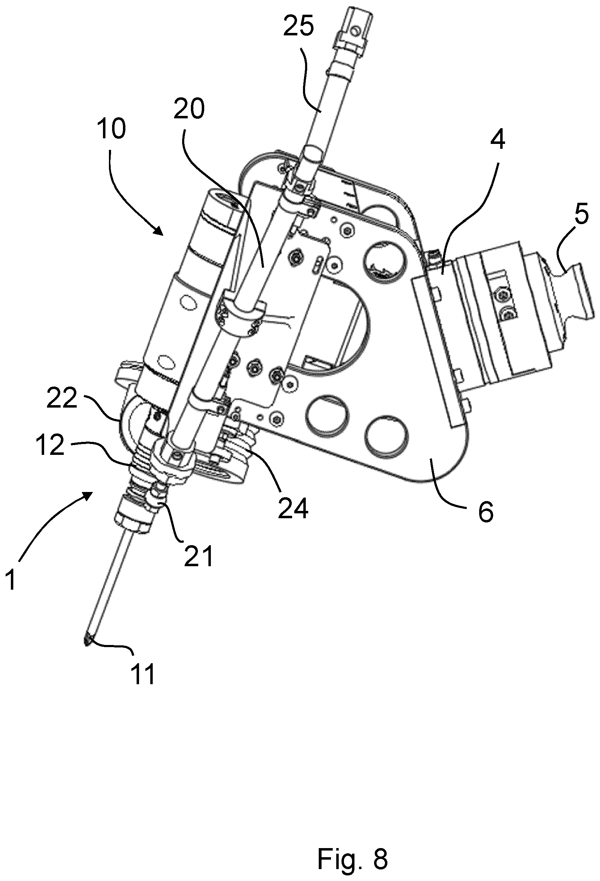

Figures 6 to 9 illustrate a second embodiment, with two retractable pistons, the first piston 20 being provided with a striking head 21 and the second piston 25 being provided with the end nozzle 22 of the suction duct 23. The other components are essentially identical to those illustrated in the previous figures and are indicated with the same reference numbers.

In this case, the end nozzle 22 of the suction duct 23 is coupled to the second piston 25. The second piston 25 can be moved from a retracted position to a position of proximity by means of a screw coupled with the unscrewing tip 11, in a manner entirely similar to the first piston 20. The second piston 25 is also preferably pneumatically operated and controlled by a solenoid valve, but can be operated in other ways known to those skilled in the art.

In the figures, the bellows 24 of the suction duct 23 is shown separate from the end nozzle 22 because the bellows 24 is intended to be made of flexible material, such as rubber. However, it is clear to those skilled in the art that, when the device is in operation, the bellows 24 must be connected to the end nozzle to ensure pneumatic continuity throughout the entire end section of the suction duct 23.

The second piston 25 is positioned at an angle to the unscrewing tip 11 and slides along an axis C that forms an acute angle with the unscrewing axis A. Preferably, the second piston 25 and the first piston 20 lie in the same plane and are arranged symmetrically or substantially symmetrically with respect to the unscrewing tip 11.

Figures 6, 7, and 8 show different views of the device with the first piston 20 and the second piston 25 both in the retracted position. In this way, the unscrewing tip 11 is not surrounded by obstructions and can operate easily even on screws that are difficult to access.

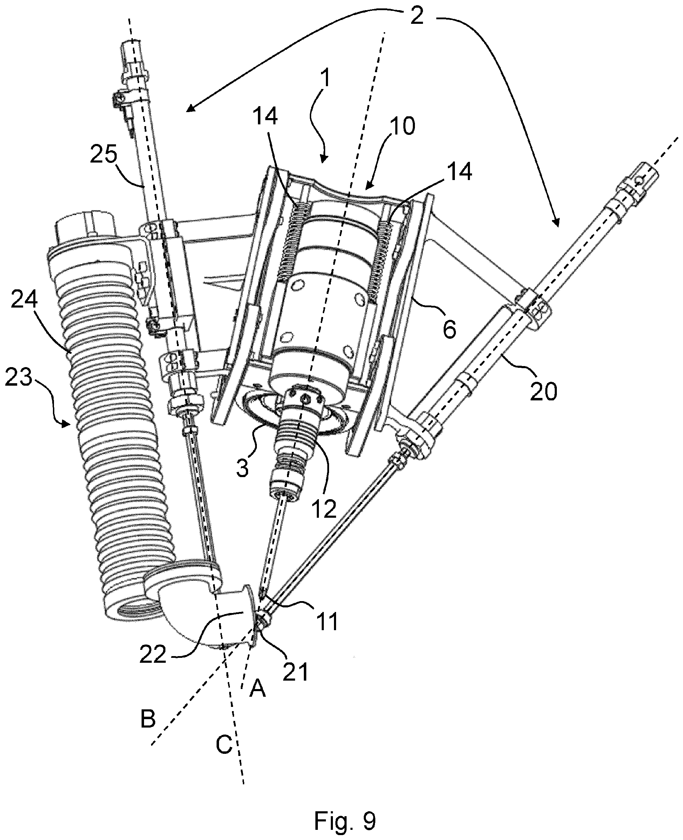

Figure 9 shows the device with the first piston 20 and the second piston 25 both in the extended position. As can be seen, the impact head 21 ends its stroke slightly beyond the position of the screw on the unscrewing tip 11, so as to completely remove the screw from the unscrewing tip 11 and deliver it to the end suction port 22, which picks it up.

## Claims

1. Unscrewing device applicable to a robot, which device comprises an unscrewing module (1) and a screw recovery module (2), the unscrewing module (1) comprising an unscrewing device (10) provided with an unscrewing tip (11),
**characterized in that**
the screw recovery module (2) comprises
a first piston (20) movable from a retracted position to a position of contact with a screw in a condition coupled with the unscrewing tip (11), which first piston (20) is provided with a striking head (21) with said screw, and
an end nozzle (22) of a suction duct (23), which end nozzle (22) is movable from a retracted position to a position in proximity to the unscrewing tip.

2. Device according to claim 1, wherein the first piston (20) is positioned at an angle to the unscrewing tip (11) and is slidable along an axis (B) that forms an acute angle with the unscrewing axis (A).

3. Device according to claim 1 or 2, wherein the end nozzle (22) of the suction duct (23) is arranged on the striking head (21) of the first piston (20).

4. Device according to claim 3, wherein said end nozzle (22) has an inverted U-shaped profile.

5. Device according to claim 1 or 2, wherein the end nozzle (22) of the suction duct (23) is coupled to a second piston (25) movable from a retracted position to a position of proximity with a screw in engagement with the unscrewing tip (11).

6. Device according to claim 5, wherein the second piston (25) is positioned at an angle to the unscrewing tip (11) and is slidable along an axis (C) forming an acute angle with the unscrewing axis (A).

7. Device according to one or more of the preceding claims, wherein the suction duct (23) is partly formed by a bellows (24) that can be moved from a contracted state to an extended state.

8. Device according to one or more of the preceding claims, wherein the unscrewing module (1) is provided with a guide bushing (12) for the unscrewing tip (11).

9. Device according to claim 8, wherein said guide bushing (12) is provided with a solenoid for magnetizing the unscrewing tip (11).

10. Device according to one or more of the previous claims, wherein the unscrewing module (1) comprises a guide (13) in which the unscrewing device (10) is placed so as to be translatable along the unscrewing axis (A), with means for cushioning the translation being provided.

11. Device according to one or more of the previous claims, wherein a camera (3) is provided, which camera (3) is connected to an artificial vision module configured for the identification of screws.

12. Device according to one or more of the previous claims, wherein a stroboscopic type illuminator (30) is provided.

13. Device according to one or more of the previous claims, wherein a force and/or torque sensor (4) and a flange (5) for coupling to the robot are provided.
